# Europäisches Patentamt
# European Patent Office
# Office européen des brevets

(11) Veröffentlichungsnummer: **0 043 341**
**B1**

(12) **EUROPÄISCHE PATENTSCHRIFT**

(45) Veröffentlichungstag der Patentschrift:
**14.12.83**

(21) Anmeldenummer: **81810227.9**

(22) Anmeldetag: **09.06.81**

(51) Int. Cl.³: **G 02 B 17/08**, G 02 B 13/14

(54) Lichtstarkes katadioptrisches Objektiv für Wärmestrahlung.

(30) Priorität: **26.06.80 CH 4899/80**

(43) Veröffentlichungstag der Anmeldung:
**06.01.82 Patentblatt 82/1**

(45) Bekanntmachung des Hinweises auf die Patenterteilung:
**14.12.83 Patentblatt 83/50**

(84) Benannte Vertragsstaaten:
**DE GB NL SE**

(56) Entgegenhaltungen:
**DE - A - 1 497 537**
**DE - A - 2 211 275**
**DE - A - 2 720 479**
**FR - A - 2 380 561**
**GB - A - 2 030 315**

(73) Patentinhaber: **KERN & CO. AG Werke für Präzisionsmechanik Optik und Elektronik, CH-5001 Aarau (CH)**

(72) Erfinder: **Canzek, Ludvik, Guellenmattstrasse 3, CH-5035 Unterentfelden (CH)**
Erfinder: **Zürcher, Walter, Birkenweg 6, CH-5000 Aarau (CH)**

(74) Vertreter: **Seeger, Jan, c/o Kern & Co. AG, CH-5001 Aarau (CH)**

## Lichtstarkes katadioptrisches Objektiv für Wärmestrahlung

Die Erfindung betrifft ein lichtstarkes katadioptrisches Objektiv für Wärmestrahlung (insbesondere im Wellenlängenbereich von 3 bis 15 μm) mit sammelnder Frontlinse, als rückflächenverspiegelte Linse ausgebildetem Hauptspiegel, Gegenspiegel sowie einem in der Nähe des Brennpunktes angeordneten Linsensystem.

Lichtstarke mehrgliedrige Infrarotobjektive sind bekannt. So ist in DE-OS Nr. 2519961 (The Rank Organisation Ltd.) ein derartiges, aus drei Menisken aufgebautes Objektiv beschrieben, von denen mindestens zwei aus Germanium bestehen und einer eine asphärische Oberfläche aufweist. Weiterhin ist aus DE-OS Nr. 2520194 (The Rank Organisation Ltd.) ein Infrarotobjektiv mit nur zwei Gliedern bekannt, von denen eines eine asphärische Fläche besitzt. DE-OS Nr. 2544148 (The Rank Organisation Ltd.) zeigt ein dreilinsiges Objektiv zur Verwendung im Wellenlängenbereich von 3 bis 5 μm des Infrarotbandes, dessen Linsen aus Silizium oder Zinksulfid bestehen und bei dem keine asphärischen Flächen verwendet sind. Schliesslich ist aus DE-PS Nr. 2211275 (Kern & Co. AG) ein lichtstarkes katadioptrisches Objektiv für den sichtbaren Spektralbereich bekannt.

Der Erfindung liegt die Aufgabe zugrunde, ein Objektiv für Wärmestrahlung anzugeben, bei dem die vorteilhaften Eigenschaften katadioptrischer Objektive ausgenutzt werden. Gelöst wird diese Aufgabe erfindungsgemäss durch die in den Patentansprüchen angegebenen Konstruktionsdaten.

Die Erfindung wird nachfolgend anhand der in den Figuren der Zeichnung dargestellten Ausführungsbeispiele nebst zugehörigen Tabellen näher beschrieben. Es zeigen:

Fig. 1 das Schema eines erfindungsgemässen Objektivs mit Elementen aus Silizium oder aus Germanium und zweigliedrigem System in der Nähe des Brennpunktes,

Fig. 2 das Schema eines erfindungsgemässen Objektivs mit Elementen aus Silizium oder Germanium und einer Linse in der Nähe des Brennpunktes.

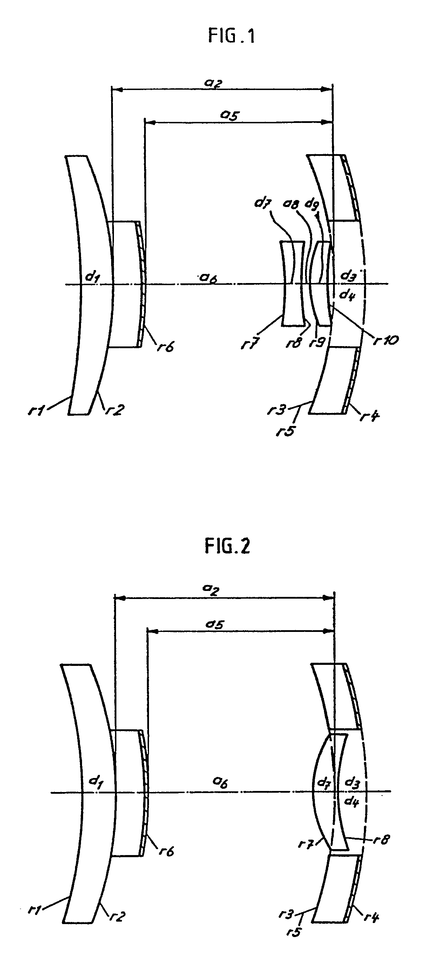

*Tabelle 1 (s. Fig. 1)*

| Radien | Dicken und Abstände | Material | $n_{4,5\,\mu m}$ |
|---|---|---|---|
| $r_1 = -1068,30$ | | | |
| | $d_1 = 8,3$ | Si | 3,4236 |
| $r_2 = -400,12$ | | | |
| | $a_2 = 55,6$ | | |
| $r_3 = -149,79$ | | | |
| | $d_3 = 7,47$ | Si | 3,4236 |
| $r_4 = -189,55$ | | | |
| | $d_4 = d_3$ | Si | 3,4236 |
| $r_5 = r_3$ | | | |
| | $a_5 = 48,45$ | | |

*Tabelle 2 (s. Fig. 1)*

| Radien | Dicken und Abstände | Material | $n_{4,5\,\mu m}$ |
|---|---|---|---|
| $r_6 = -309,96$ | | | |
| | $a_6 = 40,60$ | | |
| $r_7 = -510,38$ | | | |
| | $d_7 = 2,50$ | Si | 3,4236 |
| $r_8 = +945,77$ | | | |
| | $a_8 = 1,40$ | | |
| $r_9 = +41,20$ | | | |
| | $d_9 = 2,70$ | Si | 3,4236 |
| $r_{10} = +104,32$ | | | |
| $F = 100$ | $F : 1$ | | |

*Tabelle 3 (s. Fig. 2)*

| Radien | Dicken und Abstände | Material | $n_{11,04\,\mu m}$ |
|---|---|---|---|
| $r_1 = -1291,10$ | | | |
| | $d_1 = 8,10$ | Ge | 4,0026 |
| $r_2 = -483,66$ | | | |
| | $a_2 = 54,24$ | | |
| $r_3 = -156,08$ | | | |
| | $d_3 = 7,30$ | Ge | 4,0026 |
| $r_4 = -189,06$ | | | |
| | $d_4 = d_3$ | Ge | 4,0026 |
| $r_5 = r_3$ | | | |
| | $a_5 = 47,30$ | | |
| $r_6 = -302,04$ | | | |
| | $a_6 = 39,60$ | | |
| $r_7 = -608,08$ | | | |
| | $d_7 = 2,40$ | Ge | 4,0026 |
| $r_8 = +1143,10$ | | | |
| | $a_8 = 1,40$ | | |
| $r_9 = +45,59$ | | | |
| | $d_9 = 2,60$ | Ge | 4,0026 |
| $r_{10} = +100,05$ | | | |
| $F = 100,0$ | $F : 1$ | | |

| Radien | Dicken und Abstände | Material | $n_{4,5\,\mu m}$ |
|---|---|---|---|
| $r_1 = -574,30$ | | | |
| | $d_1 = 8,20$ | Si | 3,4236 |
| $r_2 = -300,80$ | | | |
| | $a_2 = 55,00$ | | |
| $r_3 = -132,67$ | | | |
| | $d_3 = 7,40$ | Si | 3,4236 |

| Radien | Dicken und Abstände | Material | $n_{4,5\,\mu m}$ |
|---|---|---|---|
| $r_4 = -171,09$ | | | |
| | $d_4 = d_3$ | Si | 3,4236 |
| $r_5 = r_3$ | | | |
| | $a_5 = 48,00$ | | |
| $r_6 = -306,89$ | | | |
| | $a_6 = 42,40$ | | |
| $r_7 = +45,73$ | | | |
| | $d_7 = 2,60$ | Si | 3,4236 |
| $r_8 = +98,35$ | | | |
| $F = 100,0$ | F : 1 | | |

*Tabelle 4 (s. Fig. 2)*

| Radien | Dicken und Abstände | Material | $n_{11,04\,\mu m}$ |
|---|---|---|---|
| $r_1 = -808,90$ | | | |
| | $d_1 = 8,00$ | Ge | 4,0026 |
| $r_2 = -392,90$ | | | |
| | $a_2 = 53,50$ | | |
| $r_3 = -143,99$ | | | |
| | $d_3 = 7,20$ | Ge | 4,0026 |
| $r_4 = -176,13$ | | | |
| | $d_4 = d_3$ | Ge | 4,0026 |
| $r_5 = r_3$ | | | |
| | $a_5 = 46,70$ | | |
| $r_6 = -258,20$ | | | |
| | $a_6 = 41,10$ | | |
| $r_7 = +50,58$ | | | |
| | $d_7 = 2,60$ | Ge | 4,0026 |
| $r_8 = +94,55$ | | | |
| $F = 100,0$ | F : 1 | | |

Die Objektive gemäss den Tabellen 1 bis 4 haben ein Öffnungsverhältnis 1 : 1,0. Die Frontlinse (Dicke $d_1$) ist in allen vier Fällen ein zum Objekt hohler Meniskus. Der Hauptspiegel ist als rückflächenverspiegelte Spiegellinse mit zentraler Bohrung (Dicke $d_3 = d_4$) ausgeführt, und der Gegenspiegel ist ein auf dem zentralen Teil der dem Objekt abgewandten Fläche der Frontlinse angebrachter Oberflächenspiegel. Die Ausführungsbeispiele gemäss den Tabellen 1 und 2 haben den gleichen Aufbau mit einem zweigliedrigen Linsensystem (Dicke $d_7$ und $d_9$) in der Nähe des Brennpunktes. Beim Objektiv gemäss Tabelle 1 ist als Linsenmaterial Silizium mit einem Brechungsindex n = 3,4236 bei der Lichtwellenlänge $\lambda$ = 4,5 µm verwendet, und das Objektiv ist somit auch für $\lambda$ = 4,5 µm korrigiert. Für die Ausführung gemäss Tabelle 2 ist hingegen Germanium vorausgesetzt, dessen n = 4,0026 bei $\lambda$ = 11,04 µm eine Korrektur bei 11,04 µm zweckmässig gemacht hat.

Die Ausführungsbeispiele gemäss den Tabellen 3 und 4 sind mit einer Einzellinse (Dicke $d_7$) in der Nähe des Brennpunktes aufgebaut. Material und Korrektur entsprechen den Ausführungen gemäss Tabelle 1 bzw. Tabelle 2. Bei allen vier Varianten liegt der Brennpunkt ausserhalb des Objektivs, und Farbfehler und Astigmatismus sind besser korrigiert als bei Objektiven, die nur brechende Elemente aufweisen.

## Patentansprüche

1. Lichtstarkes katadioptrisches Objektiv für Wärmestrahlung (insbesondere im Wellenlängenbereich von 3 bis 15 µm) mit sammelnder Frontlinse, als rückflächenverspiegelte Linse ausgebildetem Hauptspiegel, Gegenspiegel sowie einem in der Nähe des Brennpunktes angeordneten Linsensystem, gekennzeichnet durch folgende Konstruktionsdaten:

| Radien | Dicken und Abstände | Material | $n_{4,5\,\mu m}$ |
|---|---|---|---|
| $r_1 = -1068,30$ | | | |
| | $d_1 = 8,3$ | Si | 3,4236 |
| $r_2 = -400,12$ | | | |
| | $a_2 = 55,6$ | | |
| $r_3 = -149,79$ | | | |
| | $d_3 = 7,47$ | Si | 3,4236 |
| $r_4 = -189,55$ | | | |
| | $d_4 = d_3$ | Si | 3,4236 |
| $r_5 = r_3$ | | | |
| | $a_5 = 48,45$ | | |
| $r_6 = -309,96$ | | | |
| | $a_6 = 40,60$ | | |
| $r_7 = -510,38$ | | | |
| | $d_7 = 2,50$ | Si | 3,4236 |
| $r_8 = +945,77$ | | | |
| | $a_8 = 1,40$ | | |
| $r_9 = +41,20$ | | | |
| | $d_9 = 2,70$ | Si | 3,4236 |
| $r_{10} = +104,32$ | | | |
| $F = 100,0$ | F : 1 | | |

2. Lichtstarkes katadioptrisches Objektiv für Wärmestrahlung nach dem Oberbegriff des Anspruchs 1, gekennzeichnet durch die folgenden Konstruktionsdaten:

| Radien | Dicken und Abstände | Material | $n_{11,04\,\mu m}$ |
|---|---|---|---|
| $r_1 = -1291,10$ | | | |
| | $d_1 = 8,10$ | Ge | 4,0026 |
| $r_2 = -483,66$ | | | |
| | $a_2 = 54,24$ | | |
| $r_3 = -156,08$ | | | |
| | $d_3 = 7,30$ | Ge | 4,0026 |

| Radien | Dicken und Abstände | Material | $n_{11,04\,\mu m}$ |
|---|---|---|---|
| $r_4 = -189,06$ | | | |
| | $d_4 = d_3$ | Ge | 4,0026 |
| $r_5 = r_3$ | | | |
| | $a_5 = 47,30$ | | |
| $r_6 = -302,04$ | | | |
| | $a_6 = 39,60$ | | |
| $r_7 = -608,08$ | | | |
| | $d_7 = 2,40$ | Ge | 4,0026 |
| $r_8 = +1143,10$ | | | |
| | $a_8 = 1,40$ | | |
| $r_9 = +45,59$ | | | |
| | $d_9 = 2,60$ | Ge | 4,0026 |
| $r_{10} = +100,05$ | | | |
| $F = 100,0$ | F:1 | | |

3. Lichtstarkes katadioptrisches Objektiv für Wärmestrahlung nach dem Oberbegriff des Anspruchs 1, gekennzeichnet durch die folgenden Konstruktionsdaten:

| Radien | Dicken und Abstände | Material | $n_{4,5\,\mu m}$ |
|---|---|---|---|
| $r_1 = -574,30$ | | | |
| | $d_1 = 8,20$ | Si | 3,4236 |
| $r_2 = -300,80$ | | | |
| | $a_2 = 55,00$ | | |
| $r_3 = -132,67$ | | | |
| | $d_3 = 7,40$ | Si | 3,4236 |
| $r_4 = -171,09$ | | | |
| | $d_4 = d_3$ | Si | 3,4236 |
| $r_5 = r_3$ | | | |
| | $a_5 = 48,00$ | | |
| $r_6 = -306,89$ | | | |
| | $a_6 = 42,40$ | | |
| $r_7 = +45,73$ | | | |
| | $d_7 = 2,60$ | Si | 3,4236 |
| $r_8 = +98,35$ | | | |
| $F = 100,0$ | F:1 | | |

4. Lichtstarkes katadioptrisches Objektiv für Wärmestrahlung nach dem Oberbegriff des Anspruchs 1, gekennzeichnet durch die folgenden Konstruktionsdaten:

| Radien | Dicken und Abstände | Material | $n_{11,04\,\mu m}$ |
|---|---|---|---|
| $r_1 = -808,90$ | | | |
| | $d_1 = 8,00$ | Ge | 4,0026 |
| $r_2 = -392,90$ | | | |
| | $a_2 = 53,50$ | | |
| $r_3 = -143,99$ | | | |
| | $d_3 = 7,20$ | Ge | 4,0026 |

| Radien | Dicken und Abstände | Material | $n_{11,04\,\mu m}$ |
|---|---|---|---|
| $r_4 = -176,13$ | | | |
| | $d_4 = d_3$ | Ge | 4,0026 |
| $r_5 = r_3$ | | | |
| | $a_5 = 46,70$ | | |
| $r_6 = -258,20$ | | | |
| | $a_6 = 41,10$ | | |
| $r_7 = +50,58$ | | | |
| | $d_7 = 2,60$ | Ge | 4,0026 |
| $r_8 = +94,55$ | | | |
| $F = 100,0$ | F:1 | | |

## Claims

1. Catadioptric objective of high speed for the infra-red range (in particular for the wave-length range 3 to 15 μm) with a positive front lens, a main mirror silvered on the back surface of a lens, a counter-mirror and a lens system adjacent to the focal point, characterized by the following numerical values:

| Radii | Thicknesses and separations | Material | $n_{4,5\,\mu m}$ |
|---|---|---|---|
| $r_1 = -1068.30$ | | | |
| | $d_1 = 8.3$ | Si | 3.4236 |
| $r_2 = -400.12$ | | | |
| | $a_2 = 55.6$ | | |
| $r_3 = -149.79$ | | | |
| | $d_3 = 7.47$ | Si | 3.4236 |
| $r_4 = -189.55$ | | | |
| | $d_4 = d_3$ | Si | 3.4236 |
| $r_5 = r_3$ | | | |
| | $a_5 = 48.45$ | | |
| $r_6 = -309.96$ | | | |
| | $a_6 = 40.60$ | | |
| $r_7 = -510.38$ | | | |
| | $d_7 = 2.50$ | Si | 3.4236 |
| $r_8 = +945.77$ | | | |
| | $a_8 = 1.40$ | | |
| $r_9 = +41.20$ | | | |
| | $d_9 = 2.70$ | Si | 3.4236 |
| $r_{10} = +104.32$ | | | |
| $F = 1:1$; $f = 100.0$, where f is the focal length of the system. | | | |

2. Catadioptric objective of high speed for the infra-red range according to the preamble of claim 1, characterized by the following numerical values:

| Radii | Thicknesses and separations | Material | $n_{11,04\,\mu m}$ |
|---|---|---|---|
| $r_1 = -1291.10$ | | | |
| | $d_1 = 8.10$ | Ge | 4.0026 |
| $r_2 = -483.66$ | | | |
| | $a_2 = 54.24$ | | |
| $r_3 = -156.08$ | | | |
| | $d_3 = 7.30$ | Ge | 4.0026 |
| $r_4 = -189.06$ | | | |
| | $d_4 = d_3$ | Ge | 4.0026 |
| $r_5 = r_3$ | | | |
| | $a_5 = 47.30$ | | |
| $r_6 = -302.04$ | | | |
| | $a_6 = 39.60$ | | |
| $r_7 = -608.08$ | | | |
| | $d_7 = 2.40$ | Ge | 4.0026 |
| $r_8 = +1143.10$ | | | |
| | $a_8 = 1.40$ | | |
| $r_9 = +45.59$ | | | |
| | $d_9 = 2.60$ | Ge | 4.0026 |
| $r_{10} = +100.05$ | | | |

F = 1 : 1 ; f = 100.0, where f is the focal length of the system.

3. Catadioptric objective of high speed for the infra-red range according to the preamble of claim 1, characterized by the following numerical values:

| Radii | Thicknesses and separations | Material | $n_{4,5\,\mu m}$ |
|---|---|---|---|
| $r_1 = -574.30$ | | | |
| | $d_1 = 8.20$ | Si | 3.4236 |
| $r_2 = -300.80$ | | | |
| | $a_2 = 55.00$ | | |
| $r_3 = -132.67$ | | | |
| | $d_3 = 7.40$ | Si | 3.4236 |
| $r_4 = -171.09$ | | | |
| | $d_4 = d_3$ | Si | 3.4236 |
| $r_5 = r_3$ | | | |
| | $a_5 = 48.00$ | | |
| $r_6 = -306.89$ | | | |
| | $a_6 = 42.40$ | | |
| $r_7 = +45.73$ | | | |
| | $d_7 = 2.60$ | Si | 3.4236 |
| $r_8 = +98.35$ | | | |

F = 1 : 1 ; f = 100.0, where f is the focal length of the system.

4. Catadioptric objective of high speed for the infra-red range according to the preamble of claim 1, characterized by the following numerical values:

| Radii | Thicknesses and separations | Material | $n_{11,04\,\mu m}$ |
|---|---|---|---|
| $r_1 = -808.90$ | | | |
| | $d_1 = 8.00$ | Ge | 4.0026 |
| $r_2 = -392.90$ | | | |
| | $a_2 = 53.50$ | | |
| $r_3 = -143.99$ | | | |
| | $d_3 = 7.20$ | Ge | 4.0026 |
| $r_4 = -176.13$ | | | |
| | $d_4 = d_3$ | Ge | 4.0026 |
| $r_5 = r_3$ | | | |
| | $a_5 = 46.70$ | | |
| $r_6 = -258.20$ | | | |
| | $a_6 = 41.10$ | | |
| $r_7 = +50.58$ | | | |
| | $d_7 = 2.60$ | Ge | 4.0026 |
| $r_8 = +94.55$ | | | |

F = 1 : 1 ; f = 100.0, where f is the focal length of the system.

## Revendications

1. Objectif catadioptrique de grande ouverture relative, utilisable dans l'infrarouge (en particulier pour la gamme des longueurs d'onde de 3 à 15 µm) avec une lentille antérieure convergente, un miroir principal appliqué à la surface arrière d'une lentille, un contre-miroir et un système de lentilles voisin du foyer, caractérisé par les données numériques suivantes:

| Rayons | Epaisseurs et séparations | Matériel | $n_{4,5\,\mu m}$ |
|---|---|---|---|
| $r_1 = -1068,30$ | | | |
| | $d_1 = 8,3$ | Si | 3,4236 |
| $r_2 = -400,12$ | | | |
| | $a_2 = 55,6$ | | |
| $r_3 = -149,79$ | | | |
| | $d_3 = 7,47$ | Si | 3,4236 |
| $r_4 = -189,55$ | | | |
| | $d_4 = d_3$ | Si | 3,4236 |
| $r_5 = r_3$ | | | |
| | $a_5 = 48,45$ | | |
| $r_6 = -309,96$ | | | |
| | $a_6 = 40,60$ | | |
| $r_7 = -510,38$ | | | |
| | $d_7 = 2,50$ | Si | 3,4236 |
| $r_8 = +945,77$ | | | |
| | $a_8 = 1,40$ | | |
| $r_9 = +41,20$ | | | |
| | $d_9 = 2,70$ | Si | 3,4236 |
| $r_{10} = +104,32$ | | | |

F = 1 : 1 ; f = 100,0, où f est la distance focale du système optique.

2. Objectif catadioptrique de grande ouverture relative, utilisable dans l'infrarouge selon le préambule de la revendication 1, caractérisé par les données numériques suivantes:

| Rayons | Epaisseurs et séparations | Matériel | $n_{11,04\,\mu m}$ |
|---|---|---|---|
| $r_1 = -1291,10$ | $d_1 = 8,10$ | Ge | 4,0026 |
| $r_2 = -483,66$ | $a_2 = 54,24$ | | |
| $r_3 = -156,08$ | $d_3 = 7,30$ | Ge | 4,0026 |
| $r_4 = -189,06$ | $d_4 = d_3$ | Ge | 4,0026 |
| $r_5 = r_3$ | $a_5 = 47,30$ | | |
| $r_6 = -302,04$ | $a_6 = 39,60$ | | |
| $r_7 = -608,08$ | $d_7 = 2,40$ | Ge | 4,0026 |
| $r_8 = +1143,10$ | $a_8 = 2,40$ | | |
| $r_9 = +45,59$ | $d_9 = 2,60$ | Ge | 4,0026 |
| $r_{10} = +100,05$ | | | |

F = 1:1; f = 100,0, où f est la distance focale du système optique.

3. Objectif catadioptrique de grande ouverture relative, utilisable dans l'infrarouge selon le préambule de la revendication 1, caractérisé par les données numériques suivantes:

| Rayons | Epaisseurs et séparations | Matériel | $n_{4,5\,\mu m}$ |
|---|---|---|---|
| $r_1 = -574,30$ | $d_1 = 8,20$ | Si | 3,4236 |
| $r_2 = -300,80$ | $a_2 = 55,00$ | | |
| $r_3 = -132,67$ | $d_3 = 7,40$ | Si | 3,4236 |
| $r_4 = -171,09$ | $d_4 = d_3$ | Si | 3,4236 |
| $r_5 = r_3$ | $a_5 = 48,00$ | | |
| $r_6 = -306,89$ | $a_6 = 42,40$ | | |
| $r_7 = +45,73$ | $d_7 = 2,60$ | Si | 3,4236 |
| $r_8 = +98,35$ | | | |

F = 1:1; f = 100,0, où f est la distance focale du système optique.

4. Objectif catadioptrique de grande ouverture relative, utilisable dans l'infrarouge selon le préambule de la revendication 1, caractérisé par les données numériques suivantes:

| Rayons | Epaisseurs et séparations | Matériel | $n_{11,04\,\mu m}$ |
|---|---|---|---|
| $r_1 = -808,90$ | $d_1 = 8,00$ | Ge | 4,0026 |
| $r_2 = -392,90$ | $a_2 = 53,50$ | | |
| $r_3 = -143,99$ | $d_3 = 7,20$ | Ge | 4,0026 |
| $r_4 = -176,13$ | $d_4 = d_3$ | Ge | 4,0026 |
| $r_5 = r_3$ | $a_5 = 46,70$ | | |
| $r_6 = -258,20$ | $a_6 = 41,10$ | | |
| $r_7 = +50,58$ | $d_7 = 2,60$ | Ge | 4,0026 |
| $r_8 = +94,55$ | | | |

F = 1:1; f = 100,0, où f est la distance focale du système optique.

FIG . 1

FIG. 2